# EUROPEAN PATENT SPECIFICATION

(11) **EP 1 463 346 B1**
(45) Date of publication and mention of the grant of the patent: **02.05.2007**
(21) Application number: 04250910.9
(22) Date of filing: 20.02.2004
(51) Int. Cl.: H04Q 7/28

(54) **A method for reducing latency in a push-to-talk system**
Verfahren zur Reduzierung der Latenzzeit in einem Drücken-zum-Sprechen-System
Procédé pour réduire le temps d'attente dans un système de poussoir de conversation

(30) Priority: 24.03.2003 US 394193
(43) Date of publication of application: 29.09.2004
(73) Proprietor: LUCENT TECHNOLOGIES INC., Murray Hill, New Jersey 07974-0636 (US)
(72) Inventor: Rossetti, David, Albert, Randolph, New Jersey 07869 (US); Patel, Tejaskumar, Randolph, New Jersey 07869 (US)
(74) Representative: Sarup, David Alexander

(56) References cited:
- WO-A-03/017712
- GB-A- 2 377 854
- US-A1- 2002 173 326

## Description

### BACKGROUND OF THE INVENTION

The present invention relates to push-to-talk (PTT) voice-over-IP (VoIP) services. PTT functionality enables a mobile station to quickly communicate with one or more other mobile stations substantially simultaneously, just by, for example, depressing a PTT button on the calling mobile station. VoIP refers to communication of voice using digitized voice transported over a packet data network, as compared to the usual circuit transport method of voice communication. Accordingly, PTT VoIP service strives to provide PTT functionality through VoIP communication.

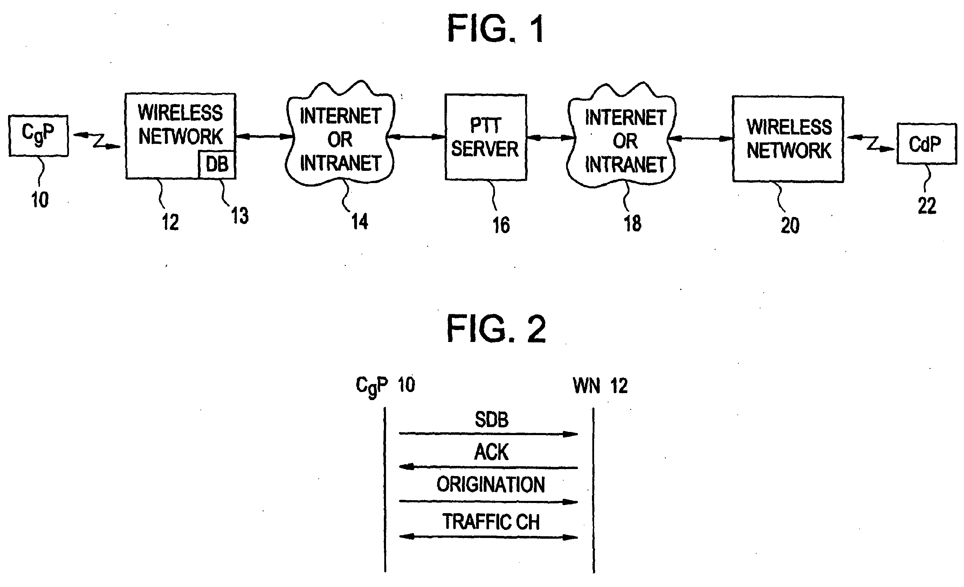

Fig. 1 illustrates a prior art general architecture for PTT VoIP communication. As shown, a calling mobile station or calling party (CgP) 10 communicates with the first wireless network 12 when initiating a PTT operation. The communication includes information such as an identifier (e.g., phone number, URL or pin number) of the party being called (i.e., called party (CdP)) 22. The first wireless network 12 then communicates with a PTT server 16 over a public or private, intranet or internet 14 (i.e., an IP network). The first wireless network 12 provides the PIT server 16 with information on the CgP 10 and the CdP 22. The first wireless network 12 manages a database 13 of information regarding the mobile stations for which the first wireless network 12 provides wireless communication services. When the first wireless network 12 also provides PIT services, the database 13 also stores, for example, IP address information in association with the mobile station's normal identification information.

The first wireless network 12 communicates a PIT request for the CgP 10 to the PIT Server 16. The PIT request identifies the CdP 22 and also provides the IP address of the CgP 10. Using a database of information stored therein, the PIT server 16 routes the PIT request to a second wireless network 20, which in this example serves the communication needs of mobile stations within a geographic area that includes the CdP 22. The PTT request is routed from the PTT server 16 to the second wireless network 20 via a second public or private, intranet or internet 18 (i.e., an IP network). As will be appreciated, the first and second wireless networks 12 and 20 could be the same wireless network when the CdP 22 and the CgP 10 are served by the same wireless network. Likewise, the first and second public or private, intranet or internet 14 and 18 could be the same network.

Using the information, for example, the IP address of the CdP 22 received from the PIT server 16, the second wireless network 20 identifies the CdP 22 and pages the CdP 22. When the CdP 22 responds to the page and indicates the CdP 22 is available to receive a PTT VoIP communication, the second wireless network 20 signals the PIT server 16 via the second IP network 18. In turn, the PIT server 16 signals the first wireless network 12 via the first network 14. Using the IP address of the CgP 10 in the signaling from the PIT 16, the first wireless network 12 accesses the database 13 to identify the CgP 10. The first wireless network 12 then notifies the identified CgP 10 that voice communication can commence. For example, the notification typically triggers an audible notification at the mobile station 10 to alert a user that voice communication can take place.

The time required to set-up PTT VoIP communication is the time from when the CgP 10 initiates a PIT operation until the time when the CgP 10 issues the audible notification. This period of time is typically referred to as the latency in a PTT VoIP set-up. A demand currently exists in the industry to reduce this latency.

While not described above, one factor contributing to the latency of PTT VoIP set-up is establishing the traffic channel of communication between the CgP 10 and the first wireless network 12 for handling the PIT VoIP communication between the CgP 10 and the first wireless network 12. Fig. 2 illustrates a communication flow diagram for initiating the PTT operation and subsequently establishing the traffic channel - typically referred to as origination. As shown, the CgP 10 initiates the PTT VoIP operation by sending a short data burst (SDB) message to the first wireless network 12. A SDB message is an IP packet sent between a mobile and a wireless network without a traffic channel assigned to this task; namely, the IP packet is sent over common or shared channels. If the SDB message is properly received, the first wireless network 12 proceeds with the PTT VoIP set-up operation as discussed above. Additionally, the first wireless network 12 sends an acknowledgement (ACK) message to the CgP 10 indicating that the SDB message was properly received.

When the ACK message is received, the CgP 10 sends an origination message to the first wireless network 12. The origination message requests that the first wireless network 12 establish (e.g., assign) a traffic channel to handle the PTT VoIP communication. In response to the origination message, the first wireless network 12 establishes the traffic channel and PIT VoIP communication can commence assuming the CdP 22 is available and the remainder of the PTT VoIP set-up operation has taken place.

US-A-2002/0 173 326 is directed to a method and apparatus for reducing latency in a group communication network. Group call signaling may be exchanged through the use of two or more short data burst (SDB) messages. This exchange of group call signaling may allow for reestablishing dedicated traffic channels for mobile stations and 5 dormant listeners.

### Summary of the Invention

A method according to the invention is as set out in claims 1, 3, 6 and 7. Preferred forms are H set out in the dependent claims.

The present invention provides a method for reducing latency in push-to-talk set up by triggering and processing initiation of a push-to-talk (PIT) operation and origination of a traffic channel for a calling party in parallel.

According to one exemplary embodiment, a traffic channel is set-up directly in response to a short data burst (SDB) message for initiating a PIT operation. More specifically, a calling mobile station or calling party sends a SDB message requesting initiation of a push-to-talk operation, and the SDB message includes an indication to perform an origination for the calling party.

According to another exemplary embodiment, an origination message is concatenated to the SDB message requesting initiation of a PIT operation for the calling party. In an alternative embodiment, a mini-origination message is concatenated to the SDB message. The mini-origination message does not include at least a portion of the calling mobile station's capability information normally present in an origination message.

### BRIEF DESCRIPTION OF THE DRAWINGS

The present invention will become more fully understood from the detailed description given herein below and the accompanying drawings, wherein like elements are represented by like reference numerals, which are given by way of illustration only and thus are not limiting of the present invention and wherein:
Fig.1 illustrates a prior art general architecture for PTT VoIP communication;
Fig. 2 illustrates a communication flow diagram for initiating the PTT operation and subsequently establishing the traffic channel between a calling party and wireless network as shown in Fig. 1;
Fig. 3 illustrates a well-known format of a short data burst message;
Fig. 4 illustrates a well-known format of an origination message;
Fig. 5 illustrates a communication flow diagram for initiating the PIT operation and establishing a traffic channel according to one embodiment of the present invention;
Fig. 6 illustrates a communication flow diagram for initiating the PTT operation and establishing a traffic channel according to second embodiment of the present invention; and
Fig. 7 illustrates a communication flow diagram for initiating the PTT operation and establishing a traffic channel according to a third embodiment of the present invention.

### DETAILED DESCRIPTION OF EMBODIMENTS

For a proper understanding of the present invention, the well-known format for a short data burst (SDB) message will be described, and then a well-known format for an origination message will be described. Subsequently, an optional operation of storing mobile station capability information at a wireless network will be described. This optional operation provides for improved performance of at least the first and third embodiments of the present invention. The embodiments of the present invention are then described, and more particularly, the implementation of the embodiments using the architecture of Fig. 1 are described. However, it should be understood that the present invention is not limited to this architecture.

### SDB Message Format

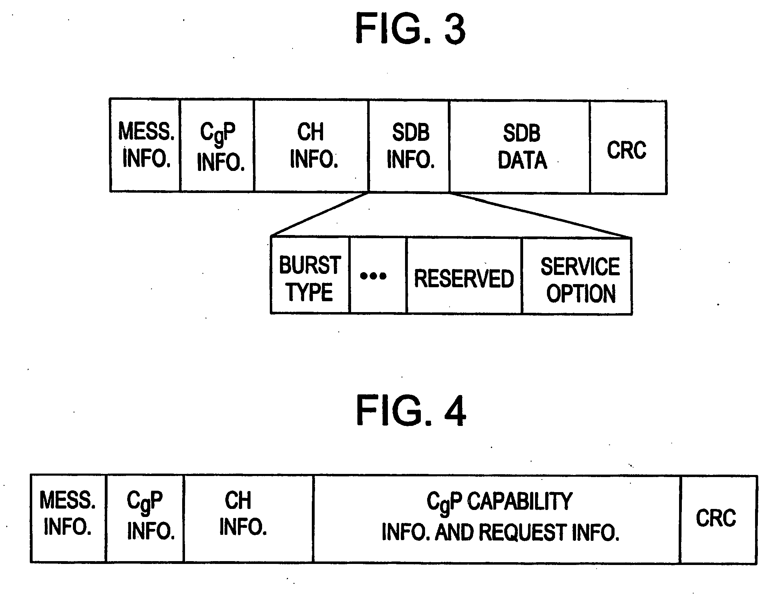

Fig. 3 illustrates a well-known format of a SDB message according to TIA/EIA IS-707-A-2. As shown, the SDB message includes a message information section, a calling mobile station or calling party (CgP) information section, a channel information section, a SDB information section, a SDB data section, and an error correction code (CRC) section. The message information section provides information such as message identifier, message length, etc. The CgP information section provides information such as the mobile station identifier (MSID) for the CgP. The channel information provides information such as the active pilot signal strength received by the CgP, and the number of additional pilots received by the CgP. The SDB information section will be discussed in detail below. The SDB data section includes, as its name suggests, the data for the SDB, and the CRC section includes the error correction code information for the SDB message. The CdP is identified within the SDB Data, at a layer above the transport layer and therefore unknown by the wireless network.

Fig. 3 illustrates a portion of the SDB information section in greater detail. As shown the SDB information section includes a burst type field, a reserved field, and a service option field as well as other fields not pertinent to this disclosure. The burst type field identifies the type of the Data Burst message - for example, a Short Data Burst, Short Message Service, Position Determination Data (this is defined in TIA/EIA TSB-58.) The reserved field is a field reserved for future use and is ignored by prior art PTT VoIP architectures. The service option field identifies are service type for the SDB message - for example, Internet Protocol (IP) or CDPD (Cellular Digital Packet Data).

### Origination Message Format

Fig. 4 illustrates a well-known format for an origination message according to TIA/EIA IS-2000. As shown, the origination message includes a message information section, a CgP information section, a channel information section, a CgP capability information and request section, and a CRC section. The message information, CgP information, channel information and CRC sections are the same as described above with respect to the SDB message format.

The CgP capability information and request section includes CgP capability information and request information. The request information indicates what the origination message is requesting - for example, establishing a traffic channel for PIT VoIP communication. The CgP capability information indicates the communication capabilities of the CgP - for example, the physical type of traffic channels supported, and the physical type of traffic channel requested.

### Storing Mobile Station (CgP) Capability Information

An optional exemplary aspect of the present invention includes having the first wireless network 12 store at least a portion of the CgP's capability information in the database 13. As is known, when a mobile station initially desires an internet connection, an origination message is sent to open a connection between the mobile station and the first network 14. According to an optional aspect of the present invention, at least a portion of the mobile station's capability information is stored in the database 13 in association with the other information kept on the mobile station. The capability information stored is in one embodiment, all of the capability information. However, in another embodiment, the capability information stored is the minimum capability information necessary for the first wireless network 12 to perform an origination operation and set-up a traffic channel between the mobile station and the first wireless network 12 if the first wireless network 12 receives nothing more than an indication to set-up such a traffic channel.

### A First Embodiment

A first embodiment of the present invention, involves tailoring the SDB message for initiating the PIT VoIP process to also request origination of a traffic channel for the PTT VoIP communication. This first embodiment takes advantage of having the CgP capability information stored in the database 13 of the first wireless network 12.

In this embodiment, the CgP 10 generates the SDB message requesting the initiation of a PIT VoIP operation according to the format illustrated in Fig. 3 in the well-known manner. However, according to one exemplary version of this embodiment, the reserved field in the SDB information section is populated with a special code that indicates to perform origination of a traffic channel for the PIT VoIP communication being requested in the SDB message. Because the CgP capability information is stored in the database 13 of the first wireless network 12 as described above, nothing more than this origination indication needs to be provided to enable the first wireless network 12 to perform the origination. Also, because the reserved field is used, the SDB message according to this version of the first embodiment can be processed by legacy architectures that do not have the capability to recognize the significance of the special code in the reserved field.

In an alternate version of this embodiment, a special code is placed in the burst type field of the SDB information section. The special code indicates that the SDB message is a PIT VoIP initiation request and an origination request. In a further alternate version of this embodiment, a special code is placed in the service option field of the SDB information section. Here the special code also identifies an origination request.

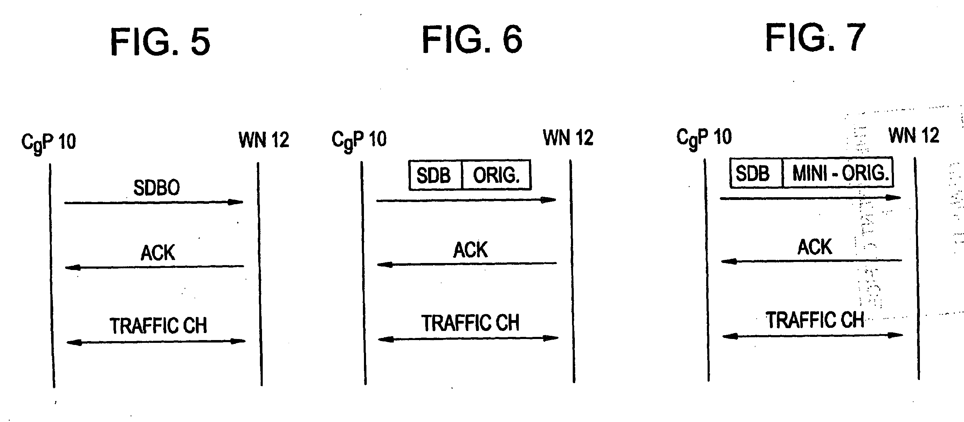

Fig. 5 illustrates a communication flow diagram for initiating the PTT operation and establishing a traffic channel (i.e., origination) according to one embodiment of the present invention. As shown, the CgP 10 sends a SDB-origination (SDBO) message as discussed above to the first wireless network 12 - the first wireless network 12 having been configured to recognize and act on the special code now included in the SDBO message. Namely, in response to the SDB message, the first wireless network 12 will initiate the PTT VoIP operation, and because of the special code in the SDBO message, the first wireless network 12 will perform the origination operation using the capability information for the CgP 10 stored in the database 13. Accordingly, if the SDBO message is properly received, the first wireless network 12 sends an acknowledgement (ACK) message to the CgP 10 and establishes a traffic channel between the CgP 10 and the first wireless network 12 as shown in Fig. 5.

By creating the SDBO message, the CgP 10 triggers the first wireless network 12 to set-up a traffic channel directly in response to a SDB message. Consequently, the CgP 10 triggers the first wireless network 12 to initiate the PTT VoIP operation and to perform the origination operation in parallel, and the latency in PTT set-up is reduced.

In an illustration of the present invention, the CgP 10 concatenates an origination message having the well-known format of Fig. 4 to a SDB message having the well-known format of Fig. 3, and sends the concatenated message to the first wireless network 12 as shown in Fig. 6. In one exemplary version of this embodiment, the concatenation is performed, for example, at a medium access control (MAC) layer in CDMA-2000 of the CgP 10 so that legacy networks see only an SDB message. The SDB message includes the well-known information to trigger initiation of a PTT VoIP operation, and the origination message includes the well-known information to trigger establishing a traffic channel between the CgP 10 and the first wireless network 12 for PTT VoIP communication.

In response to the concatenated messages, the first wireless network 12 sends an ACK message to the CgP 10, initiates the PTT VoIP operation and establishes the traffic channel between the CgP 10 and the first wireless network 12 as shown in Fig. 6. As with the first embodiment, the first wireless network 12 is triggered to initiate the PTT VoIP operation and to perform the origination operation in parallel, and the latency in PTT set-up is reduced.

### A Second Embodiment

The second embodiment of the present invention is similar to the second embodiment, but makes use of the CgP capability information stored in the database 13 of the first wireless network 12. In this embodiment, the CgP 10 generates a mini-origination message. The mini-origination message does not include the CgP capability information stored at the database 13. And, optionally, the mini-origination message lacks any other information not absolutely necessary to trigger and permit performance of an origination operation to establish a traffic channel between the CgP 10 and the first wireless network 12 for PTT VoIP communication, even without accessing the information stored in the database 13.

As shown in Fig. 7, the CgP 10 concatenates the mini-origination message to the SDB message requesting the initiation of a PIT VoIP operation. In response to the concatenated messages, the first wireless network 12 sends an ACK message to the CgP 10, initiates the PIT VoIP operation and establishes the traffic channel between the CgP 10 and the first wireless network 12 using the information stored in the database 13. As with the first and second embodiments, the CgP 10 triggers the first wireless network 12 to initiate the PTT VoIP operation and to perform the origination operation in parallel, and the latency in PTT set-up is reduced.

The invention being thus described, it will be obvious that the same may be varied in many ways. Such variations are not to be regarded as a departure from the scope of the invention, and all such modifications as would be obvious to one skilled in the art are intended to be included within the scope of the present invention as defined by the appended claims.

## Claims

1. A method for reducing latency in push-to-talk set up for a calling party, comprising:
receiving a single message requesting initiation of a push-to-talk operation, the single message being a short data burst message and including an indication to perform an origination for the calling party; and,
processing, at a wireless network (12), initiation of a the push-to-talk operation and origination of a traffic channel for the calling party in parallel based on a single message.

2. The method of claim 1, further comprising:
using previously stored communication capability information for the calling party in the processing the origination.

3. A method for reducing latency in push-to-talk set up for a calling party, comprising:
receiving a mini-origination message concatenated to a short data burst message, the short data burst message requesting initiation of a push-to-talk operation for the calling party, the mini-origination message indicating to perform an origination for the calling party, the mini-origination message not including at least a portion of the calling party communication capability information in a normal origination message; and
processing, at a wireless network (12), initiation of the push-to-talk operation and origination of a traffic channel for the calling party in parallel based on the mini-origination message concatenated to the short data burst.

4. The method of claim 3, further comprising:
using previously stored communication capability information for the calling party in the processing the origination.

5. The method of claim 1, further comprising:
setting up, at a wireless network (12), a the traffic channel directly in response to the single message for initiating the push-to-talk operation.

6. A method for reducing latency in push-to-talk set up for a calling party, comprising:
sending, from a mobile station, a single message requesting initiation of a push-to-talk operation, the single message being a short data burst (SDB) message and including an indication to perform an origination for the mobile station.

7. A method for reducing latency in push-to-talk set up for a calling party, comprising:
sending, from a mobile station, a mini-origination message concatenated to a short data burst (SDB) message, the short data burst message requesting initiation of a push-to-talk operation for the mobile station, the mini-origination message indicating to perform an origination for the mobile station, the mini-origination message not including at least a portion of the mobile station communication capability information in a normal origination message.

## Patentansprüche

1. Verfahren zum Verringern der Latenzzeit beim PTT-Aufbau (push-to-talk) für einen anrufenden Teilnehmer, mit folgendem:
Empfangen einer die Einleitung einer PTT-Operation anfordernden Einzelnachricht, wobei die Einzelnachricht eine kurze Datenburstnachricht ist und eine Anzeige zur Durchführung einer Einleitung für den rufenden Teilnehmer enthält; und
Verarbeiten an einem drahtlosen Netz (12) der Einleitung der PTT-Operation und paralleles Einleiten eines Verkehrskanals für den rufenden Teilnehmer auf Grundlage einer Einzelnachricht.

2. Verfahren nach Anspruch 1, weiterhin mit folgendem:
Benutzen von vorher gespeicherten Kommunikationsfähigkeitsinformationen für den rufenden Teilnehmer bei der Verarbeitung der Einleitung.

3. Verfahren zum Verringern der Latenzzeit beim PTT-Aufbau (push-to-talk) für einen rufenden Teilnehmer, mit folgendem:
Empfangen einer mit einer kurzen Datenburstnachricht verketteten Mini-Einleitungsnachricht, wobei die kurze Datenburstnachricht das Aufbauen einer PTT-Operation für den rufenden Teilnehmer anfordert, wobei die Mini-Einleitungsnachricht das Durchführen einer Einleitung für den rufenden Teilnehmer anzeigt, wobei die Mini-Einleitungsnachricht nicht mindestens einen Teil der Kommunikationsfähigkeitsinformationen des rufenden Teilnehmers in einer normalen Einleitungsnachricht enthält; und
Verarbeiten an einem drahtlosen Netz (12) des Aufbaus der PTT-Operation und paralleles Einleiten eines Verkehrskanals für den rufenden Teilnehmer auf Grundlage der mit dem kurzen Datenburst verketteten Mini-Einleitungsnachricht.

4. Verfahren nach Anspruch 3, weiterhin mit folgendem:
Verwenden vorher gespeicherter Kommunikationsfähigkeitsinformationen für den rufenden Teilnehmer bei der Verarbeitung der Einleitung.

5. Verfahren nach Anspruch 1, weiterhin mit folgendem:
Aufbauen an einem drahtlosen Netz (12) des Verkehrskanals direkt als Reaktion auf die Einzelnachricht zum Einleiten der PTT-Operation.

6. Verfahren zum Verringern der Latenzzeit beim PTT-Aufbau (push-to-talk) für einen rufenden Teilnehmer, mit folgendem:
Senden von einer Mobilstation einer die Einleitung einer PTT-Operation anfordernden Einzelnachricht, wobei die Einzelnachricht eine kurze Datenburst (SDB - short data burst) Nachricht ist und eine Anzeige zur Durchführung einer Einleitung für die Mobilstation enthält.

7. Verfahren zum Verringern der Latenzzeit beim PTT-Aufbau (push-to-talk) für einen rufenden Teilnehmer, mit folgendem:
Senden von einer Mobilstation einer mit einer kurzen Datenburst SDB-Nachricht verketteten Mini-Einleitungsnachricht, wobei die kurze Datenburstnachricht Einleitung einer PTT-Operation für die Mobilstation anfordert, wobei die Mini-Einleitungsnachricht das Durchführen einer Einleitung für die Mobilstation anzeigt, wobei die Mini-Einleitungsnachricht nicht mindestens einen Teil der Kommunikationsfähigkeitsinformationen der Mobilstation in einer normalen Einleitungsnachricht enthält.

## Revendications

1. Procédé destiné à réduire la latence dans une messagerie vocale instantanée établie pour un appelant, comprenant :
la réception d'un message unique demandant le déclenchement d'un fonctionnement de messagerie vocale instantanée, le message unique étant un message de rafale de données courte et comprenant une indication pour effectuer une émission pour l'appelant ; et
le traitement, au niveau d'un réseau sans fil (12), du déclenchement d'un fonctionnement de messagerie vocale instantanée et d'émission d'un canal de trafic pour l'appelant en parallèle sur la base d'un message unique.

2. Procédé selon la revendication 1, comprenant en outre :
l'utilisation d'informations de capacité de communication précédemment stockées pour l'appelant dans le traitement de l'émission.

3. Procédé destiné à réduire la latence dans une messagerie vocale instantanée établie pour un appelant, comprenant :
la réception d'un message de mini-émission concaténé à un message de rafale de données courte, le message de rafale de données courte demandant le déclenchement d'un fonctionnement de messagerie vocale instantanée pour l'appelant, le message de mini-émission indiquant d'effectuer une émission pour l'appelant, le message de mini-émission ne comprenant pas au moins une partie des informations de capacité de communication d'appelant dans un message d'émission normal ; et
le traitement, au niveau d'un réseau sans fil (12), du déclenchement du fonctionnement de messagerie vocale instantanée et d'émission d'un canal de trafic pour l'appelant en parallèle sur la base du message de mini-émission concaténé à la rafale de données courte.

4. Procédé selon la revendication 3, comprenant en outre :
l'utilisation d'informations de capacité de communication précédemment stockées pour l'appelant dans le traitement de l'émission.

5. Procédé selon la revendication 1, comprenant en outre :
l'établissement, au niveau d'un réseau sans fil (12), d'un canal de trafic directement en réponse au message unique destiné à déclencher le fonctionnement de messagerie vocale instantanée.

6. Procédé destiné à réduire la latence dans une messagerie vocale instantanée établie pour un appelant, comprenant :
l'envoi, depuis une station mobile, d'un message unique demandant le déclenchement d'un fonctionnement de messagerie vocale instantanée, le message unique étant un message de rafale de données courte (SDB) et comprenant une indication pour effectuer une émission pour la station mobile.

7. Procédé destiné à réduire la latence dans une messagerie vocale instantanée établie pour un appelant, comprenant :
l'envoi, depuis une station mobile, d'un message de mini-émission concaténé à un message de rafale de données courte (SDB), le message de rafale de données courte demandant le déclenchement d'un fonctionnement de messagerie vocale instantanée pour la station mobile, le message de mini-émission indiquant de réaliser une émission pour la station mobile, le message de mini-émission ne comprenant pas au moins une partie des informations de capacité de communication de station mobile dans un message d'émission normal.
